# EUROPÄISCHE PATENTANMELDUNG

(11) **EP 4 012 910 A1**
(43) Veröffentlichungstag der Anmeldung: **15.06.2022**
(21) Anmeldenummer: 21020443.4
(22) Anmeldetag: 02.09.2021
(51) Int. Cl.: H02M 3/335, H02M 3/155, F01N 3/20, B60W 20/16

(54) **VORRICHTUNG ZUR SPANNUNGSVERSORGUNG**

(30) Priorität: 10.12.2020 DE 102020132997
(71) Anmelder: Dr.Ing. h.c. F. Porsche Aktiengesellschaft, 70435 Stuttgart (DE)
(72) Erfinder: Scholz, Jürgen, 75233 Tiefenbronn (DE); Müller, Kai Sören, 70193 Stuttgart (DE); Schöttle, Dimo, 75417 Mühlacker (DE)

(57) **Zusammenfassung**

Vorrichtung (100) zur Spannungsversorgung für einen elektrischen Heizkatalysator (102) insbesondere eines Kraftfahrzeugs umfassend einen Gleichstromwandler (110) mit einem Eingang (112) für eine Eingangsspannung und einem Ausgang (114) für eine Ausgangsspannung, einen Tiefsetzsteller (122), der ausgebildet ist, die Ausgangsspannung des Gleichstromwandlers (110) auf eine gegenüber der Ausgangsspannung kleinere Versorgungsspannung für den elektrischen Heizkatalysator (102) herabzusetzen, wobei eine erste elektrische Baugruppe (126) angeordnet ist, die ausgebildet ist, die Versorgungsspannung gleichzurichten und zu glätten.

## Beschreibung

Die Erfindung betrifft eine Vorrichtung zur Spannungsversorgung insbesondere für einen elektrischen Heizkatalysator eines Kraftfahrzeugs.

DE 19940802 A1 offenbart einen elektrischen Heizkatalysator, der durch einen Tiefsetzsteller gespeist wird. DE 4421066 A1 offenbart einen elektrischen Heizkatalysator, der durch einen Hochsetzsteller gespeist wird.

Die Erfindung strebt an, eine demgegenüber verbesserte Spannungsversorgung anzugeben.

Dies wird durch die Vorrichtung nach dem unabhängigen Anspruch erreicht.

Die Vorrichtung zur Spannungsversorgung für einen elektrischen Heizkatalysator insbesondere eines Kraftfahrzeugs umfasst einen Gleichstromwandler mit einem Eingang für eine Eingangsspannung und einem Ausgang für eine Ausgangsspannung, einen Tiefsetzsteller, der ausgebildet ist, die Ausgangsspannung des Gleichstromwandlers auf eine gegenüber der Ausgangsspannung kleinere Versorgungsspannung für den elektrischen Heizkatalysator herabzusetzen, wobei eine erste elektrische Baugruppe angeordnet ist, die ausgebildet ist, die Versorgungsspannung gleichzurichten und zu glätten. Der Tiefsetzsteller ist deutlich kostengünstiger. Dadurch wird eine deutlich kleinere und kostengünstigere Vorrichtung realisierbar, die eine gut geeignete DC-Spannung für eine Heizkatalysator liefert.

Vorzugsweise ist der Ausgang des Gleichstromwandlers galvanisch vom Eingang des Gleichstromwandlers getrennt. Die galvanische Trennung zwischen der Spannungsquelle und dem Heizkatalysator führt zu geringen Verlusten.

Vorzugsweise umfasst die erste elektrische Baugruppe einen Gleichrichter und eine Drossel oder einen Kondensator.

Vorzugsweise ist der Gleichstromwandler für eine Eingangsspannung in einem Bereich ausgebildet, insbesondere zwischen 300 Volt und 500 Volt, wobei der Gleichstromwandler für eine Ausgangsspannung in im Wesentlichen demselben Bereich ausgebildet ist, insbesondere im Bereich zwischen 300 Volt und 500 Volt.

Vorzugsweise ist der Gleichstromwandler für eine Eingangsspannung und für eine Ausgangsspannung ausgebildet, die im Wesentlichen 400 Volt beträgt.

Vorzugsweise ist der Tiefsetzsteller ausgebildet, die Versorgungsspannung mit weniger als 70 Volt, weniger als 60 Volt oder weniger als 50 Volt bereitzustellen. Die Herabsetzung von 400V auf Werte kleiner als diese Werte führt zu geringen Verlusten im Tiefsetzsteller und ist deutlich kostengünstiger und kleiner zu bauen als ein DC/DC-Wandler von 400V auf diese Werte.

Vorzugsweise ist zwischen einem Anschluss für den elektrischen Heizkatalysator und dem Tiefsetzsteller eine zweite elektrische Baugruppe angeordnet, die ausgebildet ist, den elektrischen Heizkatalysator vor einer Überspannung zu schützen.

Vorzugsweise umfasst die zweite elektrische Baugruppe eine mit einem Verbraucher des elektrischen Heizkatalysators in Reihenschaltung anordenbare Sicherung und eine zwischen dem Anschluss und der Sicherung in Parallelschaltung zum Verbraucher des elektrischen Heizkatalysators anordenbaren Zenerdiode, insbesondere mit einer Schwellenspannung, die größer ist, als die Versorgungsspannung, vorzugsweise von 70 Volt, 60 Volt oder 50 Volt.

Vorzugsweise weist die zweite elektrische Baugruppe einen zwischen der Zenerdiode und Masse in Reihenschaltung angeordneten Widerstand und einen zwischen der Zenerdiode und dem Widerstand angeordneten Abgriff für eine Spannung zwischen der Zenerdiode und dem Widerstand auf.

Vorzugsweise weist die Vorrichtung zwischen einer Klemme für eine Batterie und dem Eingang für den Gleichstromwandler eine Schalteinrichtung auf, wobei die Schalteinrichtung einen Signaleingang aufweist, und ausgebildet ist, bei einem ersten Signalpegel am Signaleingang eine elektrisch leitende Verbindung zwischen der Klemme und dem Eingang herzustellen und bei einem zweiten Signalpegel am Signaleingang eine elektrisch leitende Verbindung zwischen der Klemme und dem Eingang zu unterbrechen, wobei die Vorrichtung eine Logikgruppe umfasst, die ausgebildet ist, wenn die Spannung am Abgriff einen Schwellwert unterschreitet ein Signal mit dem ersten Signalpegel zu erzeugen und wenn die Spannung am Abgriff den Schwellwert erreicht oder überschreitet ein Signal mit dem zweiten Signalpegel zu erzeugen.

Vorzugsweise umfasst die Logikgruppe ein RS-Flip-Flop, das ausgebildet ist, das Signal mit dem ersten Signalpegel auszugeben, wenn ein Pegel an einem Eingang des RS-Flip-Flops zum Setzen des RS-Flip-Flops anliegt, oder anderenfalls das Signal mit dem zweiten Signalpegel zu erzeugen, wobei die Logikgruppe ein NAND Gatter umfasst, das ausgebildet ist, den Pegel an den Eingang des RS-Flip-Flops auszugeben, wenn die Spannung am Abgriff den Schwellwert unterschreitet, und anderenfalls den Pegel nicht auszugeben.

In einem Aspekt ist zwischen dem Gleichstromwandler und dem Tiefsetzsteller ein erstes Filter angeordnet. In einem Aspekt ist zwischen der ersten elektrischen Baugruppe und der zweiten elektrischen Baugruppe ein zweites Filter angeordnet.

Vorzugsweise umfasst das erste Filter eine mit einem Verbraucher des elektrischen Heizkatalysators in Reihenschaltung anordenbare Drossel und einen zwischen dem Ausgang des Gleichstromwandlers und der Drossel in Parallelschaltung zum Verbraucher des elektrischen Heizkatalysators anordenbaren Kondensator.

Vorzugsweise umfasst das zweite Filter eine mit einem Verbraucher des elektrischen Heizkatalysators in Reihenschaltung anordenbare Drossel und einen zwischen der Sicherung und der Drossel in Parallelschaltung zum Verbraucher des elektrischen Heizkatalysators anordenbaren Kondensator.

Ein Heizkatalysator und ein Kraftfahrzeug, das eine derartige Vorrichtung umfasst, ist ebenfalls vorgesehen. Ein Kraftfahrzeug, das einen derartigen Heizkatalysator umfasst, ist ebenfalls vorgesehen.

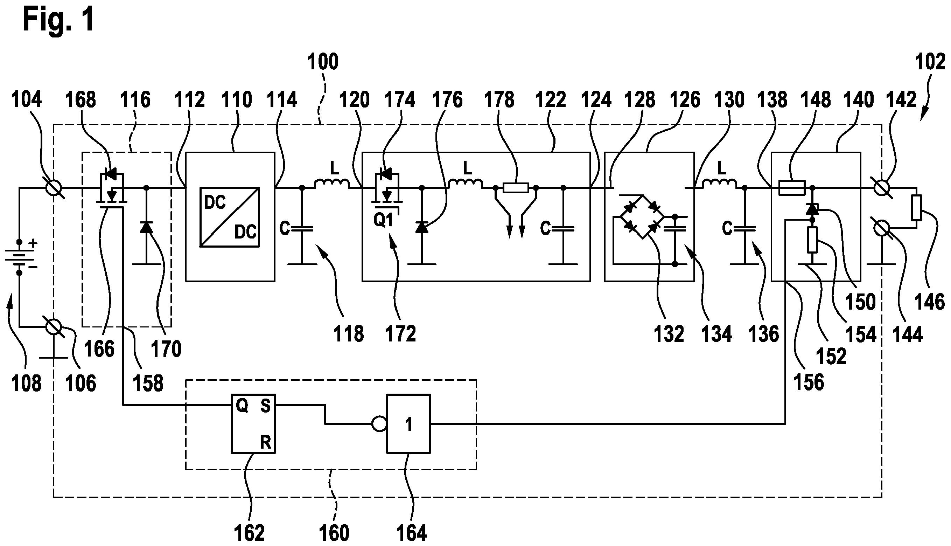

Weitere vorteilhafte Ausgestaltungen ergeben sich aus der folgenden Beschreibung und der Zeichnung. In der Zeichnung zeigt
Fig. 1 schematisch eine Vorrichtung zur Spannungsversorgung.

In Figur 1 ist eine Vorrichtung 100 zur Spannungsversorgung für einen elektrischen Heizkatalysator 102 insbesondere eines Kraftfahrzeugs dargestellt. Die Vorrichtung 100 kann ein Teil eines Steuergeräts für den Heizkatalysator 102 sein.

Die Vorrichtung 100 weist eine erste Klemme 104 und eine zweite Klemme 106 für einen Anschluss an eine Batterie 108 oder eine andere Spannungsquelle auf.

Die Vorrichtung 100 weist einen Gleichstromwandler 110 mit einem Eingang 112 für eine Eingangsspannung und einem Ausgang 114 für eine Ausgangsspannung auf.

Der Ausgang 114 des Gleichstromwandlers 110 ist im Beispiel galvanisch vom Eingang 112 des Gleichstromwandlers 110 getrennt.

Der Gleichstromwandler 110 ist im Beispiel für eine Eingangsspannung in einem Bereich ausgebildet, insbesondere zwischen 300 Volt und 500 Volt. Der Gleichstromwandler 110 ist im Beispiel für eine Ausgangsspannung in im Wesentlichen demselben Bereich ausgebildet, insbesondere im Bereich zwischen 300 Volt und 500 Volt.

Im Beispiel liefert die Batterie 108 oder die andere Spannungsquelle eine Spannung in demselben Bereich. Die Batterie 108 oder die Spannungsquelle liefert beispielsweise einen Gleichstrom bei einer Spannung von 400 Volt. Der Gleichstromwandler 110 ist vorzugsweise für eine Eingangsspannung und für eine Ausgangsspannung ausgebildet, die im Wesentlichen 400 Volt beträgt.

Zwischen dem Eingang 112 und der ersten Klemme 104 ist eine Schalteinrichtung 116 angeordnet.

Am Ausgang 114 ist ein erster Filter 118 angeordnet über den der Gleichstromwandler 110 mit einem Eingang 120 eines Tiefsetzstellers 122 verbunden ist.

Der Tiefsetzsteller 122 ist ausgebildet, die Ausgangsspannung des Gleichstromwandlers 110 auf eine gegenüber der Ausgangsspannung kleinere Versorgungsspannung an einem Ausgang 124 des Tiefsetzstellers 122 herabzusetzen.

Der Tiefsetzsteller 122 ist beispielsweise ausgebildet, die Versorgungsspannung mit weniger als 70 Volt, weniger als 60 Volt oder weniger als 50 Volt bereitzustellen. Im Beispiel ist vorgesehen, dass die Versorgungsspannung unter 60 Volt liegt. Der genaue Wert der Versorgungsspannung ist durch entsprechende Wahl der Bauteile des Tiefsetzstellers 122 an den elektrischen Heizkatalysator 102 angepasst.

Die Vorrichtung 100 weist zudem eine erste elektrische Baugruppe 126 auf, die ausgebildet ist, die Versorgungsspannung gleichzurichten und zu glätten. Im Beispiel liegt die Versorgungsspannung an einem Eingang 128 der ersten elektrischen Baugruppe 126 an. Im Beispiel wird eine gleichgerichtete Versorgungsspannung an einem Ausgang 130 der ersten elektrischen Baugruppe 126 ausgegeben.

Die erste elektrische Baugruppe 126 umfasst beispielsweise eine Reihenschaltung eines Gleichrichters und einer Drossel oder, wie in Figur 1 dargestellt eine H-Brücke als Gleichrichter 132 und einen zu den beiden Halbbrücken der H-Brücke parallelgeschalteter Kondensator 134. Drossel bezeichnet hier und im Folgenden eine Induktivität, beispielsweise eine Spule.

Am Ausgang 130 der ersten Baugruppe 126 ist ein zweiter Filter 136 angeordnet, über den die erste Baugruppe 126 mit einem Eingang 138 einer zweiten Baugruppe 140 verbunden ist.

Die zweite elektrische Baugruppe 140 ist zwischen dem Tiefsetzsteller 122 und einem ersten Anschluss 142 für den elektrischen Heizkatalysator 102 angeordnet. Die zweite Baugruppe 140 weist einen zweiten Anschluss 144 für den elektrischen Heizkatalysator 102 auf.

Die zweite elektrische Baugruppe 140 ist ausgebildet, den elektrischen Heizkatalysator 102 vor einer Überspannung zu schützen.

Im Beispiel umfasst die zweite elektrische Baugruppe 140 eine mit einem Verbraucher 146 des elektrischen Heizkatalysators 102 in Reihenschaltung anordenbare Sicherung 148 und eine zwischen dem ersten Anschluss 142 und der Sicherung 148 in Parallelschaltung zum Verbraucher 146 des elektrischen Heizkatalysators 102 anordenbaren Zenerdiode 150. Die Zenerdiode 150 weist im Beispiel eine Schwellenspannung auf, die größer als die Versorgungsspannung ist. Beispiele für Werte der Schwellenspannung sind 70 Volt, 60 Volt oder 50 Volt. Die Schwellspannung ist im Beispiel im Wesentlichen um einen Toleranzwert größer als die Versorgungsspannung für den Heizkatalysator 102 nominal sein soll. Die Schwellspannung beträgt im Beispiel 60 Volt.

Die zweite elektrische Baugruppe 140 umfasst einen zwischen der Zenerdiode 150 und Masse 152 in Reihenschaltung angeordneten Widerstand 154 und weist einen zwischen der Zenerdiode 150 und dem Widerstand 154 angeordneten Abgriff 156 auf.

Die Schalteinrichtung 116 weist einen Signaleingang 158 auf. Die Schalteinrichtung 116 ist ausgebildet, bei einem ersten Signalpegel am Signaleingang 158 eine elektrisch leitende Verbindung zwischen der ersten Klemme 104 und dem Eingang 112 des Gleichstromwandlers 110 herzustellen. Die Schalteinrichtung 116 ist ausgebildet, bei einem zweiten Signalpegel am Signaleingang 158 eine elektrisch leitende Verbindung zwischen der ersten Klemme 104 und dem Eingang 112 des Gleichstromwandlers 110 zu unterbrechen.

Die Vorrichtung 100 umfasst eine Logikgruppe 160. Die Logikgruppe 160 ist ausgebildet, wenn die Spannung am Abgriff 156 einen Schwellwert unterschreitet, ein Signal mit dem ersten Signalpegel zu erzeugen und wenn die Spannung am Abgriff 156 den Schwellwert erreicht oder überschreitet ein Signal mit dem zweiten Signalpegel zu erzeugen. Es kann eine Hysterese vorgesehen sein.

Die Logikgruppe 160 umfasst im Beispiel ein RS-Flip-Flop 162. Das RS-Flip-Flop 162 ist ausgebildet, das Signal mit dem ersten Signalpegel auszugeben, wenn ein Pegel an einem Eingang S des RS-Flip-Flops zum Setzen des RS-Flip-Flops anliegt. Das RS-Flip-Flop 162 ist ausgebildet anderenfalls das Signal mit dem zweiten Signalpegel zu erzeugen.

Die Logikgruppe 160 umfasst im Beispiel ein NAND Gatter 164. Das NAND Gatter 164 ist ausgebildet, den Pegel an den Eingang S des RS-Flip-Flops auszugeben, wenn die Spannung am Abgriff 156 den Schwellwert unterschreitet, und anderenfalls den Pegel nicht auszugeben.

Das erste Filter 118 weist im Beispiel eine mit dem Verbraucher 146 des elektrischen Heizkatalysators 102 in Reihenschaltung anordenbare Drossel L und einen zwischen dem Ausgang 114 des Gleichstromwandlers 110 und der Drossel L in Parallelschaltung zum Verbraucher 146 des elektrischen Heizkatalysators 102 anordenbaren Kondensator C.

Das zweite Filter 118 weist im Beispiel eine mit dem Verbraucher 146 des elektrischen Heizkatalysators 102 in Reihenschaltung anordenbare Drossel L und einen zwischen der Sicherung 148 und der Drossel L in Parallelschaltung zum Verbraucher 146 des elektrischen Heizkatalysators 102 anordenbaren Kondensator C.

Die Schalteinrichtung 116 weist im Beispiel einen normal sperrenden n-Kanal MOSFET auf. Ein Source-Anschluss des MOSFET ist über eine in Richtung auf dessen Gate-Anschluss hin in Durchlassrichtung angeordnete Diode 168 mit dem Gate-Anschluss verbunden. Der Source-Anschluss des MOSFET ist über eine in Richtung auf Masse hin in Sperrrichtung angeordnete Diode 170 mit Masse verbunden.

Der Tiefsetzsteller 122 weist im Beispiel einen normal sperrenden n-Kanal MOSFET auf. Ein Source-Anschluss des MOSFET ist über eine in Richtung auf dessen Gate-Anschluss hin in Durchlassrichtung angeordnete Diode 174 mit dem Gate-Anschluss verbunden. Der Source-Anschluss des MOSFET ist über eine in Richtung auf Masse hin in Sperrrichtung angeordnete Diode 176 mit Masse verbunden. Der Gate-Anschluss ist mit dem Eingang 120 des Tiefsetzsteller 120 verbunden. Der Tiefsetzsteller 122 weist zudem eine Spule L auf. Die Spule L ist mit ihren einen Eingang mit dem Source-Anschluss des MOSFET verbundene. Die Spule L ist mit ihrem anderen Eingang mit einem Eingang eines Stromsensors 178 verbunden. Der andere Eingang des Stromsensors 178 ist mit dem Ausgang 124 des Tiefsetzstellers 122 verbunden. Der Tiefsetzsteller 122 weist zudem einen Kondensator C auf, der mit dem Ausgang 124 einerseits und mit Masse andererseits verbunden ist.

## Patentansprüche

1. Vorrichtung (100) zur Spannungsversorgung für einen elektrischen Heizkatalysator (102) insbesondere eines Kraftfahrzeugs **gekennzeichnet, durch** einen Gleichstromwandler (110) mit einem Eingang (112) für eine Eingangsspannung und einem Ausgang (114) für eine Ausgangsspannung, einen Tiefsetzsteller (122), der ausgebildet ist, die Ausgangsspannung des Gleichstromwandlers (110) auf eine gegenüber der Ausgangsspannung kleinere Versorgungsspannung für den elektrischen Heizkatalysator (102) herabzusetzen, wobei eine erste elektrische Baugruppe (126) angeordnet ist, die ausgebildet ist, die Versorgungsspannung gleichzurichten und zu glätten.

2. Vorrichtung (100) nach Anspruch 1, **dadurch gekennzeichnet, dass** der Ausgang (114) des Gleichstromwandlers (110) galvanisch vom Eingang (112) des Gleichstromwandlers (110) getrennt ist.

3. Vorrichtung (100) nach einem der vorherigen Ansprüche, **dadurch gekennzeichnet, dass** die erste elektrische Baugruppe (126) einen Gleichrichter (132) und eine Drossel oder einen Kondensator (134) umfasst.

4. Vorrichtung (100) nach einem der vorherigen Ansprüche, **dadurch gekennzeichnet, dass** der Gleichstromwandler (110) für eine Eingangsspannung in einem Bereich ausgebildet ist, insbesondere zwischen 300 Volt und 500 Volt, wobei der Gleichstromwandler (110) für eine Ausgangsspannung in im Wesentlichen demselben Bereich ausgebildet ist, insbesondere im Bereich zwischen 300 Volt und 500 Volt.

5. Vorrichtung (100) nach einem der vorherigen Ansprüche, **dadurch gekennzeichnet, dass** der Gleichstromwandler (110) für eine Eingangsspannung und für eine Ausgangsspannung ausgebildet ist, die im Wesentlichen 400 Volt beträgt.

6. Vorrichtung (100) nach einem der vorherigen Ansprüche, **dadurch gekennzeichnet, dass** der Tiefsetzsteller (122) ausgebildet ist, die Versorgungsspannung mit weniger als 70 Volt, weniger als 60 Volt oder weniger als 50 Volt bereitzustellen.

7. Vorrichtung (100) nach einem der vorherigen Ansprüche, **dadurch gekennzeichnet, dass** zwischen einem Anschluss (142) für den elektrischen Heizkatalysator (102) und dem Tiefsetzsteller (122) eine zweite elektrische Baugruppe (140) angeordnet ist, die ausgebildet ist, den elektrischen Heizkatalysator (102) vor einer Überspannung zu schützen.

8. Vorrichtung (100) nach Anspruch 7, **dadurch gekennzeichnet, dass** die zweite elektrische Baugruppe (140) eine mit einem Verbraucher (146) des elektrischen Heizkatalysators (102) in Reihenschaltung anordenbare Sicherung (148) und eine zwischen dem Anschluss (142) und der Sicherung (148) in Parallelschaltung zum Verbraucher (146) des elektrischen Heizkatalysators (102) anordenbaren Zenerdiode (150), insbesondere mit einer Schwellenspannung, die größer ist, als die Versorgungsspannung, vorzugsweise von 70 Volt, 60 Volt oder 50 Volt, umfasst.

9. Vorrichtung (100) nach Anspruch 8, **dadurch gekennzeichnet, dass** die zweite elektrische Baugruppe (140) einen zwischen der Zenerdiode (150) und Masse (152) in Reihenschaltung angeordneten Widerstand (154) und einen zwischen der Zenerdiode (150) und dem Widerstand (154) angeordneten Abgriff (156) für eine Spannung zwischen der Zenerdiode (150) und dem Widerstand (152) aufweist.

10. Vorrichtung (100) nach einem der vorherigen Ansprüche, **dadurch gekennzeichnet, dass** die Vorrichtung (100) zwischen einer Klemme (104) für eine Batterie (108) und dem Eingang (112) für den Gleichstromwandler (110) eine Schalteinrichtung (116) aufweist, wobei die Schalteinrichtung (116) einen Signaleingang (158) aufweist, und ausgebildet ist, bei einem ersten Signalpegel am Signaleingang (158) eine elektrisch leitende Verbindung zwischen der Klemme (104) und dem Eingang (112) herzustellen und bei einem zweiten Signalpegel am Signaleingang (158) eine elektrisch leitende Verbindung zwischen der Klemme (104) und dem Eingang (112) zu unterbrechen, wobei die Vorrichtung (100) eine Logikgruppe (160) umfasst, die ausgebildet ist, wenn die Spannung am Abgriff (156) einen Schwellwert unterschreitet ein Signal mit dem ersten Signalpegel zu erzeugen und wenn die Spannung am Abgriff (156) den Schwellwert erreicht oder überschreitet ein Signal mit dem zweiten Signalpegel zu erzeugen.

11. Vorrichtung (100) nach Anspruch 10, **dadurch gekennzeichnet, dass** die Logikgruppe (160) ein RS-Flip-Flop (162) umfasst, das ausgebildet ist, das Signal mit dem ersten Signalpegel auszugeben, wenn ein Pegel an einem Eingang (S) des RS-Flip-Flops zum Setzen des RS-Flip-Flops anliegt, oder anderenfalls das Signal mit dem zweiten Signalpegel zu erzeugen, wobei die Logikgruppe (160) ein NAND Gatter (164) umfasst, das ausgebildet ist, den Pegel an den Eingang (S) des RS-Flip-Flops auszugeben, wenn die Spannung am Abgriff den Schwellwert unterschreitet, und anderenfalls den Pegel nicht auszugeben.

12. Vorrichtung (100) nach einem der vorherigen Ansprüche, **dadurch gekennzeichnet, dass** zwischen dem Gleichstromwandler (110) und dem Tiefsetzsteller (122) ein erstes Filter (118) angeordnet ist und/oder dass zwischen der ersten elektrischen Baugruppe (126) und der zweiten elektrischen Baugruppe (140) ein zweites Filter (136) angeordnet ist.

13. Vorrichtung (100) nach Anspruch 12, **dadurch gekennzeichnet, dass** das erste Filter (118) eine mit einem Verbraucher (146) des elektrischen Heizkatalysators (102) in Reihenschaltung anordenbare Drossel (D) und einen zwischen dem Ausgang (114) des Gleichstromwandlers (110) und der Drossel (D) in Parallelschaltung zum Verbraucher (146) des elektrischen Heizkatalysators (102) anordenbaren Kondensator (C) umfasst.

14. Vorrichtung (100) nach Anspruch 12 oder 13, **dadurch gekennzeichnet, dass** das zweite Filter (136) eine mit einem Verbraucher (146) des elektrischen Heizkatalysators (102) in Reihenschaltung anordenbare Drossel (D) und einen zwischen der Sicherung (148) und der Drossel (D) in Parallelschaltung zum Verbraucher (146) des elektrischen Heizkatalysators (102) anordenbaren Kondensator (C) umfasst.

15. Heizkatalysator (102) für ein Kraftfahrzeug, **dadurch gekennzeichnet, dass** der Heizkatalysator eine Vorrichtung nach einem der Ansprüche 1 bis 14 umfasst.

16. Kraftfahrzeug, **dadurch gekennzeichnet, dass** das Kraftfahrzeug eine Vorrichtung (100) nach einem der Ansprüche 1 bis 14 oder einen Heizkatalysator (102) nach Anspruch 15 umfasst.
